## Europäisches Patentamt

## European Patent Office

## Office européen des brevets

(11) Veröffentlichungsnummer: **0 344 663**
**A2**

(12) **EUROPÄISCHE PATENTANMELDUNG**

(21) Anmeldenummer: **89109597.8**

(22) Anmeldetag: **27.05.89**

(51) Int. Cl.4: **B29C 67/12 , B29B 15/12**

(30) Priorität: **03.06.88 DE 3818943**

(43) Veröffentlichungstag der Anmeldung:
**06.12.89 Patentblatt 89/49**

(84) Benannte Vertragsstaaten:
**AT BE CH DE FR GB IT LI NL**

(71) Anmelder: **Keramchemie GmbH**
**Berggarten 1**
**D-5433 Siershahn(DE)**

(72) Erfinder: **Schwickart, Karl-Josef, Dipl.-Ing.**
**Poststrasse 25**
**D-5433 Siershahn(DE)**
Erfinder: **Pospiech, Jochen, Ing. (grad)**
**Rehpfad 14**
**D-5413 Bendorf(DE)**

(74) Vertreter: **Kossobutzki, Walter, Dipl.-Ing.(FH)**
**Waldstrasse 6**
**D-5419 Helferskirchen(DE)**

(54) **Verfahren zur Herstellung von duroplastischen, chemisch beständigen Apparaten, Behältern, Rohren und dgl.**

(57) Die Erfindung bezieht sich auf ein Verfahren zur Herstellung von duroplastischen, chemisch beständigen Apparaten, Behältern, Rohren und dgl. in selbsttragender Bauweise, bei dem etwa 25 -75 Gewichtsteile eines heißhärtenden, vorkondensierten Phenolformaldehyd oder Furanharzes zunächst mit etwa 25 - 75 Gewichtsteilen eines Füllstoffes, beispielsweise Ruß, Kokspulver, Kaolin, Glimmer, Quarzmehl oder dgl., vermischt und anschließend diese Harzpaste auf eine freie Formfläche aufgetragen und verarbeitet wird.

Um zu ermöglichen, daß diese Formteile ohne großen technischen, insbesondere Formaufwand herstellbar sind und auch insbesondere bei einer Temperaturwechselbeanspruchung nicht zu Rissen neigen, wird ein textiles Fasergewebe durch einen Tauchvorgang beidseitig mit der Harzpaste beschichtet, die Harzpaste wird über Abquetschrollen in das Fasergewebe gedrückt und das mit der Harzpaste durchsetzte Fasergewebe wird auf die Formfläche in mindestens zwei Lagen aufgebracht.

# Verfahren zur Herstellung von duroplastischen, chemisch beständigen Apparaten, Behältern, Rohren und dgl.

Die Erfindung bezieht sich auf ein Verfahren zur Herstellung von duroplastischen, chemisch beständigen Apparaten, Behältern, Rohren und dgl. in selbsttragender Bauweise, bei dem etwa 25 -75 Gewichtsteile eines heißhärtenden, vorkondensierten Phenolformaldehyd- oder Furanharzes zunächst mit etwa 25 - 75 Gewichtsteilen eines Füllstoffes, beispielsweise Ruß, Kokspulver, Kaolin, Glimmer, Quarzmehl oder dgl., vermischt und anschließend diese Harzpaste auf eine freie Formfläche aufgetragen und verarbeitet wird.

Zur Herstellung von chemisch beständigen, homogenen, einschichtigen Apparaten, Behältern, Rohren und dgl. in selbsttragender Bauweise ist eine teigige, insbesondere von Hand verarbeitbare Formmasse bekannt, die aus einer Mischung von etwa 45 - 55 Gewichtsteilen eines heißhärtenden, vorkondensierten Phenolformaldehyd- oder Furanharzes und etwa 45 - 55 Gewichtsteilen Füllstoff, insbesondere Schwerspat, Kaolin, Glimmer, Graphit, Kokspulver und/oder Ruß, besteht. Einer solchen Formmasse werden etwa 10 - 30 Gewichtsteile Glas- und/oder Kohlenstoffasern mit einer Faserlänge von etwa 0,3 - 25,0 mm zugesetzt. Diese teigige Formmasse läßt sich von Hand oder mittels geeigneter Werkzeuge sowohl auf waagrechten als auch auf senkrechten Formflächen verarbeiten, in Vertiefungen eindrücken und um Dorne legen, so daß auch Teile mit komplizierter Form hergestellt wer den können. Die Formgebungsmöglichkeit wird noh dadurch erweitert, daß sich bereits ausgehärtete Formteile mit frischer, plastischer Formmasse durch einen weiteren Aushärtevorgang fest miteinander verbinden lassen. Der Aushärtevorgang erfolgt in einem Autoklav unter Druck und bei einer Temperatur von etwa 140 Grad Celsius. Diese Verbindung ist zum Teil eine mechanische Haftung, jedoch zu einem gewissen Grad auch eine Angliederung von noch freien Molekülgruppen der ausgehärteten Formmasse an solche der plastischen Formmasse. Ausgeheizte bzw. ausgehärtete Formteile lassen sich spanabhebend bearbeiten. Bei einer solchen Formmasse nehmen die Fasern eine unkontrollierte, nicht vorbestimmbare Lage ein. Da die teigige Formmasse in Abhängigkeit von der Größe des Formteiles in mehreren Batzen auf die Formfläche aufgelegt und dann verarbeitet wird, ist zwischen den einzelnen Batzen nicht immer eine durch Fasern angestrebte Verbindung vorhanden. Dies kann dazu führen, daß bei den aus diesen Formmassen hergestellten Formteilen, insbesondere bei einer Temperaturwechselbeanspruchung, Risse auftreten können, die sich nachteilig auf die Formteile auswirken.

Es ist ferner bekannt, mit Phenolharz getränkte textile Fasergewebe, sogenannte Prepregs, herzustellen, aus denen in einer verschließbaren Form Formteile hergestellt werden, die dann in der geschlossenen Form durch ein Preßverfahren bei einer Temperatur von 150 - 170 Grad Celsius aushärten. Bei größeren Formteilen, beispielsweise im Flugzeugbau, ist es bekannt, diese nach dem sogenannten Vakuumsackverfahren herzustellen. Beide Verfahren erfordern einen nicht unerheblichen, technischen Aufwand. Aufgrund der Tatsache, daß die einzelnen Lagen des mit Phenolharz getränkten Fasergewebes durch besondere Schichten aus Phenolharz miteinander verbunden werden, besteht bei der Verwendung einer offenen Form bzw. einer freie Formfläche die Gefahr, daß das Phenolharz, insbesondere bei der Erwärmung im Autoklav, an allen nicht horizontal verlaufenden Formflächen aus dem Fasergewebe herausläuft, so daß derartige Formteile unbrauchbar werden. Wegen der hohen Sprödigkeit des Phenolharzes kann es darüber hinaus bei Harzansammlungen im Fasergewebe zu Rissen kommen.

Der Erfindung liegt deshalb die Aufgabe zugrunde, ein Verfahren zur Herstellung von duroplastischen, chemisch beständigen Apparaten, Behältern, Rohren und dgl. in selbsttragender Bauweise zu schaffen, welches es ermöglicht, daß diese Formteile ohne großen technischen, insbesondere Formaufwand herstellbar sind und auch insbesondere bei einer Temperaturwechselbeanspruchung nicht zu Rissen neigen.

Zur Lösung dieser Aufgabe wird gemäß der Erfindung bei einem Verfahren der eingangs beschriebenen Gattung vorgeschlagen, daß ein textiles Fasergewebe durch einen Tauchvorgang beidseitig mit der Harzpaste beschichtet, die Harzpaste über Abquetschrollen in das Fasergewebe gedrückt und das mit der Harzpaste durchsetzte Fasergewebe auf die Formfläche in mindestens zwei Lagen aufgebracht wird.

Mit diesem Verfahren ist es möglich, auf freien Formflächen, also ohne aufwendige Formen, Formteile auch mit komplizierter Gestalt und insbesondere senkrechten Flächen herzustellen, ohne daß die Gefahr des Auslaufens der Harzpaste und der Rißbildung gegeben ist.

Weitere Merkmale des Verfahrens gemäß der Erfindung sind in den Ansprüchen 2 - 8 offenbart.

Die Erfindung wird nachfolgend anhand von Ausfhrungsbeispielen näher erläutert.

Zunächst wird eine Harzpaste hergestellt, die aus einer Mischung aus 100 Gewichtsteilen eines heißhärtenden, vorkondensierten Phenolformaldehydharzes und 80 Gewichtsteilen Glimmer besteht. Nachdem diese Harzpaste in einen Trog bzw. in ein Tränkbad eingefüllt wurde, wird ein beispielsweise auf einer Rolle aufgewickeltes, textiles Fasergewebe, welches aus Glas-oder Kohlenstoffasern bestehen kann, über Umlenkrollen durch das Tränkbad geführt. Dabei wird das textile Fasergewebe auf beiden Seiten unregelmäßig mit der Harzpaste beschichtet. Mit geringem Abstand über dem Trog sind mindestens zwei Abquetschrollen vorgesehen, die nicht nur die Harzpaste gleichmäßig über das textile Fasergewebe verteilen, sondern diese Harzpaste auch in das Fasergewebe drücken.

Dieses mit der Harzpaste durchsetzte Fasergewebe kann nun auf einen mit einer Trennfolie versehenen Dorn in zwei oder mehr sich überlappenden Lagen unter Vorspannung aufgewickelt werden. Sobald die auf dem Dorn herzustellende Schicht eine vorgegebene Dicke erreicht hat, wird die Außenfläche des auf dem Dorn gebildeten Rohres geglättet. Bedarfsweise kann noch eine Abdeckfolie aufgewickelt werden, um eine optisch einwandfreie Außenfläche des Rohres zu erhalten. Das Rohr bzw. Formteil wird anschließend auf dem Dorn in horizontaler Lage ohne Drehbewegung in einem Autoklaven bei einer Temperatur von etwa 140 Grad Celsius und einem Druck von 8 bar über einen Zeitraum von etwa 6 Stunden gehärtet. Anschließend wird das Rohr von dem Dorn abgezogen.

In Abänderung des vorstehenden Ausführungseispieles ist es möglich, vor dem Aufwickeln des mit Harzpaste durchsetzten Fasergewebes auf dem Dorn eine etwa 1 mm dicke Schicht aus einer pastösen Formmasse aufzubringen, die aus der vorbeschriebenen Harzpaste bestehen kann. Selbstverständlich ist hier aber auch die Verwendung einer anderen pästösen Formmasse möglich. Zusätzlich kann auch eine Deckschicht nach dem Wickelvorgang aufgebracht werden, die aus der Harzpaste oder einer anderen pastösen Formmasse besteht.

Das mit der Harzpaste durchsetzte Fasergewebe kann zugeschnitten und auf einer freien Formfläche mit weitgehend beliebiger Gestalt aufgelegt werden. Dabei ist es zweckmäßig, wenn vor der ersten Lage dieses Fasergewebes eine Schicht von etwa 0,5 mm Dicke aus der Harzpaste oder einer anderen pastösen Formmasse auf die freie, mit einem Trennmittel versehene Formfläche aufgebracht wird. Nach dem Anrollen des Fasergewebes mit einer geeigneten Rolle kann die nächste Lage des mit der Harzpaste durchsetzten Fasergewebes aufgebracht und ebenfalls angerollt werden. An Stoßstellen vorhandene Fugen werden mit der Harzpaste ausgefüllt. Bedarfsweise kann zwischen den einzelnen Lagen des Fasergewebes eine Zwischenschicht in einer Dicke von etwa 0,5 mm aus der Harzpaste eingebracht werden. Nachdem die letzte Lage des mit der Harzpaste durchsetzten Fasergewebes aufgebracht wurde, kann diese Lage noch mit einer Deckschicht aus Harzpaste oder einer anderen pastösen Formmasse versehen werden. Anschließend wird das laminierte Formteil in der vorerwähnten Weise in einem Autoklav ausgehärtet.

Es ist möglich, das mit der Harzpaste durchsetzte Fasergewebe durch eine besondere Heizzone zu führen, in der das im abgefüllten Phenolformaldehydharz vorhandene Wasser ausdampft, so daß die Harzpaste eine höhere Steifigkeit errecht. Nach dem Verlassen der Heizzone kann dann das Fasergewebe unter Verwendung einer Trennfolie aus Kunststoff, beispielsweise aus Polyäthylen, zu einer Rolle aufgewickelt und bis zur Verarbeitung zwischengelagert werden. Bei der Verarbeitung dieses Fasergewebes mit der angetrockneten Harzpaste ist es auf jeden Fall erforderlich, daß vor dem Aufbringen der ersten Lage auf die freie Formfläche eine Schicht aus der Harzpaste oder einer anderen pastösen Formmasse und zwischen den einzelnen Lagen dieses Fasergewebes eine besondere Zwischenschicht aus der Harzpaste aufgebracht wird. Auch die letzte Lage des angetrockneten Fasergewebes wird dann mit einer Deckschicht aus der Harzpaste oder einer anderen pastösen Formmasse versehen.

## Ansprüche

1. Verfahren zur Herstellung von duroplastischen, chemisch beständigen Apparaten, Behältern, Rohren und dgl. in selbsttragender Bauweise, bei dem etwa 25 - 75 Gewichtsteile eines heißhärtenden, vorkondensierten Phenolformaldehyd- oder Furanharzes zunächst mit etwa 25 - 75 Gewichtsteilen eines Füllstoffes, beispielsweise Ruß, Kokspulver, Kaolin, Glimmer, Quarzmehl oder dgl., vermischt und anschließend diese Harzpaste auf eine freie Formfläche aufgetragen und verarbeitet wird, dadurch gekennzeichnet, daß ein textiles Fasergewebe durch einen Tauchvorgang beidseitig mit der Harzpaste beschichtet, die Harzpaste über Abquetschrollen in das Fasergewebe gedrückt und das mit der Harzpaste durchsetzte Fasergewebe auf die Formfläche in mindestens zwei Lagen aufgebracht wird.

2. Verfahren nach Anspruch 1, dadurch gekennzeichnet, daß vor dem Aufbringen des mit Harzpaste durchsetzten Fasergewebes die Formfläche mit einer dünnen Schicht aus pastöser Formmasse versehen wird.

3. Verfahren nach Anspruch 1 oder 2,
dadurch gekennzeichnet,
daß vor dem Aufbringen der zweiten und jeden weiteren Lage des mit Harzpaste durchsetzten Fasergewebes die vorhergehende Lage mit einer zusätzlichen, dünnen Zwischenschicht aus Harzpaste versehen wird.

4. Verfahren nach mindestens einem der Ansprüche 1 - 3,
dadurch gekennzeichnet,
daß die letzte Lage des mit Harzpaste durchsetzten Fasergewebes mit einer dünnen Deckschicht aus pastöser Formmasse versehen wird.

5. Verfahren nach mindestens einem der Ansprüche 2 - 3,
dadurch gekennzeichnet,
daß die Schicht, die Zwischenschichten und die Deckschicht in einer Dicke von mindestens 0,2 mm aufgebracht werden.

6. Verfahren nach mindestens einem der Ansprüche 1 - 5,
dadurch gekennzeichnet,
daß die auf das Fasergewebe aufgebrachte Harzpaste nachkondensiert und getrocknet wird.

7. Verfahren nach Anspruch 6,
dadurch gekennzeichnet,
daß das mit Harzpaste durchsetzte und getrocknete Fasergewebe vor der Verarbeitung unter Verwendung einer Trennfolie zwischengelagert wird.

8. Verfahren nach Anspruch 7,
dadurch gekennzeichnet,
daß das Fasergewebe als Rollenware ausgebildet ist und als Rolle zwischengelagert wird.